# EUROPEAN PATENT SPECIFICATION

(11) **EP 3 784 566 B1**
(45) Date of publication and mention of the grant of the patent: **30.08.2023**
(21) Application number: 18916249.8
(22) Date of filing: 26.04.2018
(51) Int. Cl.: B64C 1/14

(54) **METHOD AND AN INTERLOCK ARRANGEMENT FOR SECURE LATCHING OF A FIRST BODY TO A SECOND BOD AT AN AERIAL VEHICLE**
VERFAHREN UND VERRIEGELUNGSANORDNUNG ZUR SICHEREN VERRIEGELUNG EINES ERSTEN KÖRPERS MIT EINEM ZWEITEN KÖRPER BEI EINEM LUFTFAHRZEUG
PROCÉDÉ ET AGENCEMENT DE VERROUILLAGE POUR VERROUILLAGE SÉCURISÉ D'UN PREMIER CORPS À UN SECOND CORPS AU NIVEAU D'UN VÉHICULE AÉRIEN

(43) Date of publication of application: 03.03.2021
(73) Proprietor: SAAB AB, 581 88 Linköping (SE)
(72) Inventor: SCHUSTER, Samuel, 582 56 Linköping (SE); NORDQVIST, Jonas, 555 94 Jönköping (SE)
(74) Representative: Zacco Sweden AB
(86) International application number: PCT/SE2018/050428
(87) International publication number: WO 2019/209151

(56) References cited:
- WO-A1-84/01761
- WO-A1-2009/059808
- US-A- 4 395 000
- US-A- 4 395 000
- US-A- 4 715 562
- US-A- 5 823 473
- US-A1- 2002 000 493
- US-A1- 2002 139 897
- US-A1- 2010 001 136
- US-B1- 6 454 210
- US-B1- 6 454 210

## Description

### TECHNICAL FIELD

The present invention relates to a method for secure latching a first body to a second body of an aerial vehicle by means of an interlock arrangement. The present invention also relates to an interlock arrangement.

The present invention concerns the industry manufacturing interlock arrangements and applications thereof.

The present invention also may concern the aerial vehicle industry or other industries putting into use such interlock arrangements, i.e. designed for secure latching of doors.

### BACKGROUND

Current technology as published provides latching systems for latching aircraft doors comprising multiple safety features that are incorporated into the latching systems to prevent the aircraft doors from opening during flight.

Prior art latching systems require proximity sensors arranged adjacent the aircraft door perimeter for detecting that the aircraft door is closed enough so that the latching sequence can start. The failure probability of such proximity sensors must be very low as it is extremely important that the aircraft door is in position for latching before the latching sequence starts. If the latching mechanism of the latching system does not engage with the latch fittings for providing secure latching of the aircraft door, the aircraft may take-off with an open aircraft door which would adversely affect the flight safety. Prior art latching systems also require additional sensors, which function independently of the proximity sensors and which are used for redundancy purpose increasing reliability and backup that the aircraft door is fully closed before the latching sequence starts. The indication made by the sensors regarding that the aircraft door is ready to latch requires high reliability. The use of a sensor system including proximity sensors and additional sensors for secure latching involves high cost in manufacture and maintenance service.

US 9 199 716 discloses a door system configured for conventional opening and closing. An electrical actuator moves the door. A sensor is configured to determine movement information of the door and the actuator.

US 4395000A1 discloses a latch and lock mechanism for an aircraft cargo door. The latch and lock mechanism comprises latch units configured such that a cargo ramp only can be actuated only when the door is in an open position. A cam-actuated interlock mechanism of the latch units is adapted to lock door actuator rods when the cargo ramp is closed, and to unlock the door actuator rods when the cargo ramp is open.

### SUMMARY OF THE INVENTION

An object is to increase the safety level of secure latching of a first body to a second body comprising an interlock arrangement.

An object is to provide secure latching of aircraft doors.

An object is to provide an interlock arrangement that can be produced cost-effective.

An object is to provide an interlock arrangement that is simplified for maintenance service.

An object is to ensure that the aircraft door is mechanically latched in closed position before take-off and reliable indication of secure latching by means of a sensor unit.

An object is to ensure that the latching of the aircraft door is not possible until the aircraft door is closed.

At least one of said objects is obtained by a method for secure latching a first body to a second body of an aerial vehicle by means of an interlock arrangement comprising a latch fitting member of a first body and a laterally moveable latch bar member of a second body, which interlock arrangement is configured for latching the first body to the second body into a closed position, whereas the laterally moveable latch bar member is configured to subsequently latch the latch fitting member in a latching position; the latch fitting member is configured to move with the first body making a first motion from an open position to the closed position.

There is provided a blocking member portion of a blocking member that is configured to block a stop surface of the laterally moveable latch bar member for blocking the laterally moveable latch bar member from making a second motion from an unlatching position into the latching position.

The blocking member portion is configured to be pushed away from the stop surface by means of a pressing portion moved together with the first body during the first motion.

The method comprises the steps of; closing the first body into the closed position; pushing away the blocking member portion from the stop surface by means of the first motion; providing the second motion of the laterally moveable latch bar member from the unlatching position into the latching position subsequently the blocking member portion has been pushed away from the stop surface; and latching the first body to the second body in a closed position by positioning the laterally moveable latch bar member in the latching position.

In such way is achieved that the blocking member physically blocks the second motion from initiating if the blocking member has not interacted with the closing first body.

Alternatively, the laterally moveable latch bar member is configured to pull in the first body from a near closed position to the closed position, by means of the latch fitting engagement portion of the latch fitting member when being engaged with the laterally moveable latch bar member

In such way is achieved that the latching of the first body can start with the first body not fully closed, but closed enough within the pull-in capacity of the laterally moveable latch bar member.

Alternatively, the method comprises the further step of detecting the position and/or motion of the blocking member portion relative the laterally moveable latch bar member.

Alternatively, the method comprises the step of indicating that the blocking member portion has been pushed away from the stop surface.

Alternatively, the interlock arrangement comprises a sensor unit coupled to a control unit and configured to signal to the control unit to command the drive arrangement to move the laterally moveable latch bar member accordingly to the detected state of the blocking member portion relative the laterally moveable latch bar member.

Since the interlock arrangement may be electromechanically actuated, the sensor unit may be used for operating the interlock arrangement from actually detected position of the blocking member.

In such a way a sensor unit can be used that is configured for the start of the laterally moveable latch bar member motion and could be designed less complex than a proximity sensor indicating that the aircraft door is near closed and ready to latch.

Alternatively, the sensor unit may be configured to feed information to the control unit about the actual position of the blocking member and thus indicating the actual position of the first body relative to the second body in fully closed position or in near closed position.

Alternatively, the method of providing the second motion of the laterally moveable latch bar member from the unlatching position into the latching position subsequently the blocking member portion has been pushed away from the stop surface comprises an automatic and/or a semi-automatic and/or manual latching sequence.

Alternatively, the method of making the first motion and/or second motion is performed automatically and/or a semi-automatically and/or manually.

Alternatively, the method comprises the further steps of; passing a latch fitting engagement portion of the latch fitting member through a recess formed in the laterally moveable latch bar member and pushing away the blocking member portion; and bringing into engagement the latch fitting member with an engagement area of the laterally moveable latch bar member adjacent the recess by making the second motion.

Alternatively, the recess of the laterally moveable latch bar member is configured to unlatch the latch fitting member when the laterally moveable latch bar member is moved to its unlatched position, wherein the recess of the laterally moveable latch bar member permits the latch fitting member to disengage from the laterally moveable latch bar member when the first body is moved from the closed position.

Alternatively, the blocking member portion is configured to fill up the recess of the laterally moveable latch bar member when the first body is in the open position.

Thereby the blocking member portion prevents movement of the laterally moveable latch bar member until the blocking member is pushed away by the latch fitting member of the closing first body.

In such way is achieved that the interlock arrangement uses an integrated blocking member which interacts with the latch fitting member and the laterally moveable latch bar member per se, which solution provides weight saving and cost efficiency in production.

Alternatively, the blocking member is attached to a rotating shaft rotatable about a second axis arranged parallel to the laterally moveable latch bar member extending along a first axis and slidingly arranged along the first axis.

Alternatively, a spring arrangement is configured to bias the blocking member portion in the recess when the first body is in the open position and the latch fitting member is not received in the recess.

Alternatively, the spring arrangement comprises a torsion spring.

In such a way is achieved that at least three simultaneous failures have to occur for error interrupt regarding secure latching of the first body to the second body in closed position.

There is thus no possibility to move the laterally moveable latch bar member into fake "latched position" if the latch fitting member is not in position to be latched. Such fake "latched position" would indicate to the pilot that the aircraft I ready to take-off.

At least one of said objects may be obtained by an interlock arrangement comprising a latch fitting member of a first body and a laterally moveable latch bar member of a second body of an aerial vehicle, which interlock arrangement (1) is configured for latching the first body to the second body in a closed position, the laterally moveable latch bar member is configured to subsequently latch the latch fitting member into a latching position; the latch fitting member is configured to move with the first body making a first motion from an open position to the closed position; wherein a blocking member portion of a blocking member is configured to block a stop surface of the laterally moveable latch bar member for blocking the laterally moveable latch bar member to make a second motion from an unlatching position to the latching position; and the blocking member portion is configured to be pushed away from the stop surface by means of a pressing portion moved together with the first body during the first motion.

Alternatively, a sensor unit is associated with the blocking member portion for detecting that the blocking member portion has been pushed away from the abutment surface.

Alternatively, the sensor unit comprises a position sensor and/or a motion sensor.

Alternatively, the sensor unit comprises a sensor target of a sensor unit first part and comprises a sensor target detecting unit of a sensor unit second part.

Alternatively, the sensor target is arranged to the blocking member for indicating a first body near closed and ready to latch- state.

Alternatively, the sensor target detecting unit is arranged stationary relative the second body for detecting the motion of the blocking member portion.

Alternatively, the sensor target detecting unit is rigidly coupled to a rotatable blocking member configured to rotate into or out from the recess of the laterally moveable latch bar member.

Alternatively, the sensor target is rigidly coupled to the second body.

Alternatively, the control unit is coupled to a drive arrangement configured for driving the first body into a closed position or a near closed position.

Alternatively, the control unit is coupled to a drive arrangement configured for driving the laterally moveable latch bar member into the latching position.

Alternatively, the sensor unit is coupled to the control unit, which in turn is coupled to the drive arrangement configured to move the laterally moveable latch bar member.

Alternatively, the sensor unit is configured to detect that the blocking member has been pushed away from the stop surface by means of the sensor target detecting unit being rotated together with the blocking member into a position facing the sensor target.

Alternatively, the pressing portion forms a latch fitting engagement portion of the latch fitting member configured to pass a recess of the laterally moveable latch bar member when the first body making the first motion, wherein the stop surface is formed in the recess.

Alternatively, the latch fitting engagement portion is configured to engage an engagement area of the laterally moveable latch bar member arranged adjacent the recess in the latched position.

Alternatively, the first body is configured to be closed into the closed position, whereas the blocking member portion is pushed away from the stop surface by the pressing portion for permitting the laterally moveable latch bar member to make the second motion into the latching position, the interlock arrangement comprises a control unit coupled to a sensor unit configured to detect the state of the blocking member portion, wherein the control unit is configured to control the second motion of the laterally moveable latch bar member.

Alternatively, the laterally moveable latch bar member is slidingly arranged in the second body and is displaceable in parallel with an elongated edge section of the first body comprising at least two latch fitting members.

Alternatively, the laterally moveable latch bar member further comprises a lock member configured for locking the laterally moveable latch bar member in the latching position.

Alternatively, the blocking member portion of the blocking member is configured to be pushed away in a direction perpendicular to the flight direction.

Alternatively, the blocking member portion of the blocking member is configured to rotate together with the blocking member about the second axis which may be parallel to the first axis.

Alternatively, the first body constitutes an aircraft door.

Alternatively, the second body constitutes an aircraft fuselage.

Alternatively, the laterally moveable latch bar member is configured to be slidingly moved in parallel to the flight direction and moved relative the second body.

Alternatively, laterally moveable latch bar member mates the latch fitting member.

Alternatively, the laterally moveable latch bar member is arranged at an edge of an aircraft door.

Alternatively, the laterally moveable latch bar member is arranged at an edge of an opening of an aircraft fuselage.

Alternatively, the latch fitting member is arranged at an edge of an aircraft door.

Alternatively, the latch fitting member is arranged at an edge of an opening of an aircraft fuselage.

Alternatively, the laterally moveable latch bar member latch bar may be electromechanically actuated by means of a drive arrangement or an actuator.

Alternatively, the laterally moveable latch bar member is configured to be translated back and forth by applying a force generated by an electromechanical drive arrangement or actuator.

At least one of said objects may be obtained by a control unit configured to control secure latching of a first body to a second body by means of an interlock arrangement claimed by the enclosed claims, wherein the control unit is coupled to a drive arrangement configured for driving the first body into a closed position with the second body and driving the laterally moveable latch bar member to latch the latch fitting member into the latching position; the control unit is configured to control the latching according to any of the method claims disclosed herein.

At least one of said objects may be obtained by a data medium storing program adapted for controlling secure latching a first body to a second body by means of a control unit, wherein the data medium storing program comprises a program code stored on a medium, which is readable on a computer, for causing the control unit to perform the method steps of; closing the first body into the closed position; pushing away the blocking member portion from the stop surface by means of the first motion; providing the second motion of the laterally moveable latch bar member from the unlatching position to the latching position subsequently the blocking member portion has been pushed away from the stop surface; and latching the first body to the second body in a closed position by positioning the laterally moveable latch bar member in the latching position.

At least one of said objects may be obtained by an aerial vehicle comprising a fuselage skin structure and at least a door structure, which is configured to be closable arranged in an aperture of the fuselage skin structure and safely latched to the fuselage skin structure, the fuselage skin structure comprises an aperture perimeter surrounding the aperture, a latch fitting member is arranged at the door structure, wherein at least a portion of the aperture perimeter comprises the claimed interlock arrangement comprising a laterally moveable latch bar member configured for linear motion and engagement with the latch fitting member in a latched position for secure latching of the door structure, the interlock arrangement further comprises a rotatable lock member configured for rotary motion for engagement with and configured for locking the laterally moveable latch bar member in the latched position; a drive arrangement is coupled to the laterally moveable latch bar member and to the rotatable lock member via a translation mechanism configured to convert rotary motion of the actuator device into the linear motion and into the rotary motion.

The laterally moveable latch bar member may be configured to subsequently, after that the first body has been closed to the closed position, latch the latch fitting member in a latching position.

The interlock arrangement may comprise at least two latch fitting members.

The latch fitting members are arranged at the first body along an imaginary line that is parallel to the first axis.

The recess may comprise a sloping surface configured to engage and pull the latch fitting member when the laterally moveable latch bar member makes the second motion.

When the laterally moveable latch bar is in unlatching position, the recess receives the latch fitting member -when the first body is near closed or closed- whereby the blocking member portion is pushed away by the latch fitting member until such extent that the laterally moveable latch bar can make the second motion.

The recess comprises an engagement portion that is configured to engage the latch fitting member and additionally pull the second body to the closed position.

The laterally moveable latch bar engages the latch fitting members in the latching position for latching the first body to the second body.

Sensor unit may comprise an electronic sensor.

The electronic sensor may comprise a precision micro sensor, angular rate sensor, position sensor, or an angular position sensor.

The sensor unit may be configured to feed data about the orientation of the blocking member portion with respect to a specified reference position (e.g. unlatching position of the latch bar member) as expressed by the amount of rotation necessary to rotate the blocking member portion from its position blocking the laterally moveable latch bar member to its position, when the blocking member portion is pushed away from the stop surface of the laterally moveable latch bar member, whereas the blocking member portion is configured to rotate about the second axis.

The blocking member may be journaled along a guide means and pushed away in a direction transversely to the first axis.

The definition of the expression "closed" may include "fully closed" or "near closed".

The expression "near closed" may mean a position of the first body, wherein the latch fitting member the first body is in a position reachable by the laterally moveable latch bar member, which is configured to pull the latch fitting member a final distance for providing the closed position.

The drive arrangement may comprise at least an electrical actuator for opening and closing the first body.

The drive arrangement may comprise at least an electrical actuator for moving the laterally moveable latch bar member.

The aerial vehicle may be a commercial aircraft, a military aircraft, a helicopter, an UAV and others.

### BRIEF DESCRIPTION OF THE DRAWINGS

The disclosure of this document will now be described by way of examples with references to the accompanying schematic drawings, of which:
Figs. 1a-1c illustrate an aircraft door being secure latched by an interlock arrangement according to a first example;
Figs. 2a-2c illustrate an interlock arrangement according to a second example;
Figs. 3a-3c illustrate an interlock arrangement according to a third example;
Figs. 4a-4c illustrate an interlock arrangement according to a fourth example;
Figs. 5a-5b illustrate a respective flow chart according to further aspects; and
Fig. 6 illustrates a control unit of an interlock arrangement according to a further example.

### DETAILED DESCRIPTION

Hereinafter, examples of the disclosure will be described in detail with reference to the accompanying drawings, wherein for the sake of clarity and understanding some details of no importance may be deleted from the drawings. Some details may have the same reference number but may relate to different examples.

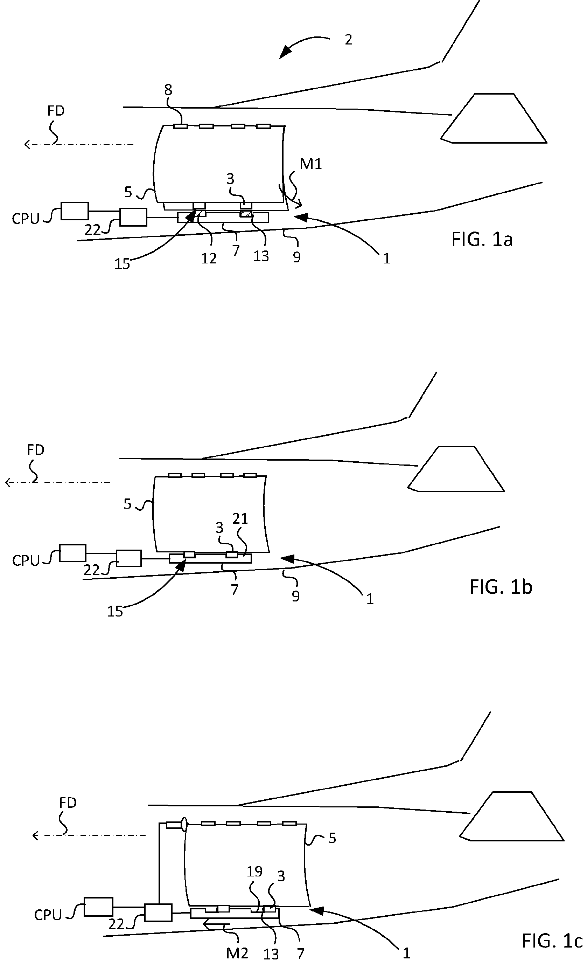

Figs. 1a-1c illustrate an aircraft door being subjected to secure latching by means of an interlock arrangement according to a first example. The illustrated interlock arrangement is positioned within an aircraft fuselage.

Fig. 1a illustrates an interlock arrangement 1 comprising a latch fitting member 3 of a first body 5 and a laterally moveable latch bar member 7 of a second body 9. In this example the first body 5 is an aircraft door and the second body 9 constitutes the aircraft fuselage of an aircraft 2 (partly shown). The first body 5 is hingedly arranged to the second body 9 by means of a hinge arrangement 8. The interlock arrangement 1 is configured for latching the first body 5 to the second body 9 in a closed position as is shown in Fig. 1b. The latch fitting member 3 is configured to move with the first body 5 making a first motion M1 from an open position to the closed position. Subsequently, as being shown Fig. 1c, the laterally moveable latch bar member 7 is moved in accordance with a second motion M2 along a first axis A1 by means of an actuator 22 for engaging and latching the latch fitting member 3 into a latching position. The laterally moveable latch bar member 7 is slidingly arranged along the first axis A1 in the second body 9 and is displaceable in parallel with a door perimeter edge of the first body 5 comprising at least two latch fitting members 3. The laterally moveable latch bar member 7 is configured to be slidingly moved in parallel to the flight direction FD and is configured to be moved relative the second body 9.

A blocking member portion (not shown) of a blocking member 12 is configured to block a stop surface 13 of the laterally moveable latch bar member 7 for blocking the laterally moveable latch bar member 7 to make the second motion M2 from the unlatching position to the latching position. The stop surface 13 is formed in a recess 19 (shown in Fig. 1c) of the laterally moveable latch bar member 7 and the blocking member portion is configured to be moved into the recess 19 for blocking purpose.

The blocking member portion of the blocking member 12 is configured to be pushed away from the stop surface 13 by means of the pressing portion 15 of the latch fitting member 3.

The blocking member portion may be configured to be pushed away in a direction perpendicular to the first axis A1 by means of the pressing portion 15 of the latch fitting member 3.

The latch fitting members 3 is configured to be moved together with the first body 5 during the first motion M1.

In Fig. 1b is shown that the respective blocking member portion has been pushed away by the respective latch fitting member 3 when the first body 5 has been closed or near closed to the second body 9.

The pressing portion 15 may form a latch fitting engagement portion (not shown) of the latch fitting member 3 configured to pass the recess 19. The latch fitting member 3 is moved through the recess 19 when the first body is closed and makes the first motion M1.

The latch fitting engagement portion is configured to engage an engagement area 21 (shown in Fig. 1b) of the laterally moveable latch bar member 7 arranged adjacent the recess 19 in the latched position. The engagement is provided by moving the laterally moveable latch bar member 7 in accordance with the second motion M2.

A control unit CPU is configured to control secure latching the first body 5 to the second body 9 by means of the interlock arrangement 1. The control unit CPU is coupled to a drive arrangement 22 configured for driving the first body 5 into a closed position to the second body 9 and driving the laterally moveable latch bar member 7 to latch the latch fitting member 3 into the latching position.

The control unit CPU is configured to control an exemplary method for secure latching the first body 5 to the second body 9 by means of the interlock arrangement.

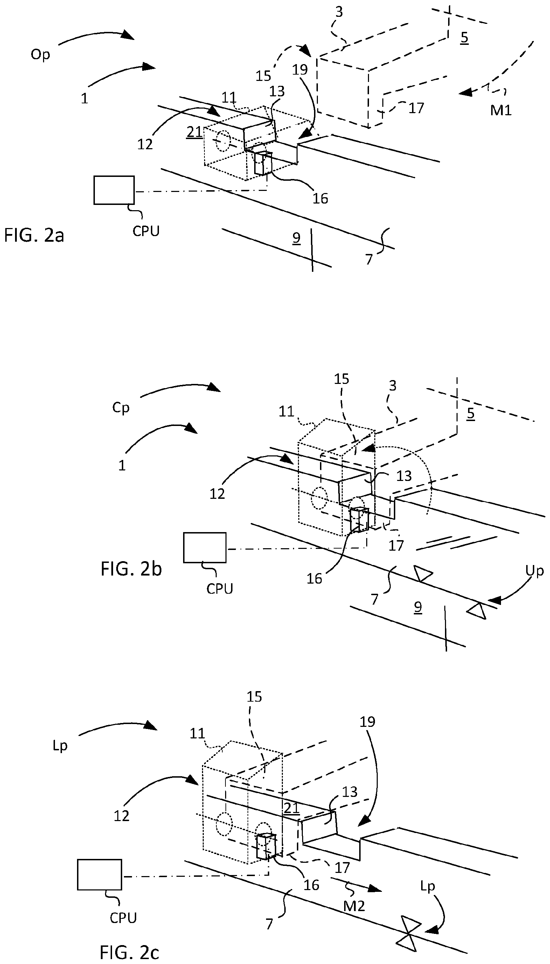

Figs. 2a-2c illustrate an interlock arrangement 1 according to a second example. A first body 5 is open as partly shown in Fig. 2a and is moved to be closed. The interlock arrangement 1 comprises a latch fitting member 3 of the first body 5 and a laterally moveable latch bar member 7 of a second body 9 (partly shown).

The latch fitting member 3 is configured to move with the first body 5 making a first motion M1 from an open position Op to the closed position Cp.

The interlock arrangement 1 may be configured for latching the first body 5 to the second body 9 in a closed position Cp (See Fig. 2b). The laterally moveable latch bar member 7 is configured to subsequently latch the latch fitting member 3 in a latching position Lp shown in Fig. 2c.

A blocking member portion 11 of a blocking member 12 is configured to block a stop surface 13 of the laterally moveable latch bar member 7 for blocking the laterally moveable latch bar member 7 to make a second motion M2 (shown in Fig. 2c) from an unlatching position Up (shown in Fig. 2b) to the latching position Lp.

The blocking member portion 11 is configured to be pushed away from the stop surface 13 by means of a pressing portion 15 of the latch fitting member 3 moved together with the first body 5 during the first motion M1. In Fig. 2b is shown that the blocking member portion 11 has been pushed away entirely so that the second motion M2 can be permitted.

The pressing portion 15 also may constitute a latch fitting engagement portion 17 of the latch fitting member 3 configured to pass a recess 19 (shown in Fig. 2c) of the laterally moveable latch bar member 7, when the first body 5 makes the first motion M1 into the closed position or near closed position.

The stop surface 13 may be formed in the recess 19. The latch fitting engagement portion 17 is configured (in the latched position Lp) to engage an engagement area 21 of the laterally moveable latch bar member 7. The engagement area 21 is arranged adjacent the recess 19.

The first body 5 is configured to be closed into the closed position Cp, whereas the blocking member portion 11 is pushed away from the stop surface 13 by the pressing portion 15 for permitting the laterally moveable latch bar member 7 to make the second motion M2 into the latching position Lp.

The interlock arrangement 1 further may comprise a control unit CPU coupled to a sensor unit 16 configured to detect the state of the blocking member portion 11. The control unit CPU is configured to control the second motion M2 of the laterally moveable latch bar member 7. The sensor unit 16 may comprise a position sensor and/or a motion sensor and/or proximity sensor. The sensor unit 16 may be associated with the blocking member portion 11 or with the blocking member 12 for detecting that the blocking member portion 11 has been pushed away from the abutment surface 13.

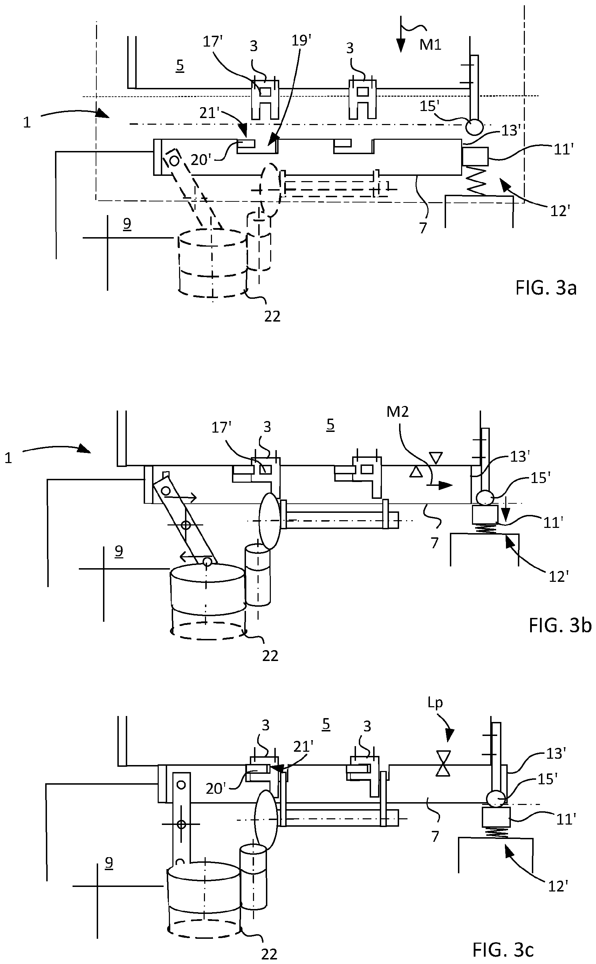

Figs. 3a-3c illustrate an interlock arrangement 1 according to a third example. The interlock arrangement 1 comprises at least a latch fitting member 3 of a first body 5 and comprises a laterally moveable latch bar member 7 of a second body 9. The interlock arrangement 1 is configured for latching the first body 5 to the second body 9 in a closed position, which position is illustrated in Figs. 3b-3c.

The laterally moveable latch bar member 7 may be configured to pull (in near closed position) the latch fitting member 3 and thus the first body 5 to the closed position and then latch the latch fitting member 3 into a latching position shown in Fig. 3c.

The latch fitting member 3 is thus configured to move with the first body 5 making a first motion M1 (see Fig. 3a) from an open position to the closed position. The laterally moveable latch bar member 7 is moved by means of a linkage arrangement of an actuator 22 in a second motion M2 for engaging and latching the latch fitting member 3 into the latching position Lp.

A blocking member portion 11' of a blocking member 12' is arranged to the laterally moveable latch bar member 7 and is configured to block a stop surface 13' of the laterally moveable latch bar member 7 for blocking the laterally moveable latch bar member 7 to make the second motion M2 from an unlatching position to the latching position Lp. The blocking member portion 11' is configured to be pushed away from the stop surface 13' by means of a pressing portion 15' moved together with the first body 5 during the first motion M1. The pressing portion 15' is firmly attached to the first body 5.

The first body 5 is configured to be closed into the closed position or near the closed position, wherein during the first motion M1 the blocking member portion 11' is pushed away from the stop surface 13' by the pressing portion 15' for permitting the laterally moveable latch bar member 7 to make the second motion M2 into the latching position Lp.

A latch fitting engagement portion 17' of the latch fitting member 3 is moved during the first motion M1 into a recess 19' formed in the laterally moveable latch bar member 7 as shown in Fig. 3a and 3b. Each latch fitting engagement portion 17' will be engaged by an engagement area 21' of an engagement pin 20' of the laterally moveable latch bar member 7 arranged adjacent the respective recess 19' in the latched position. The engagement is provided in the unblocked state (when the blocking member portion 11' is pushed away) and is provided by the laterally moveable latch bar member 7 in accordance with the second motion M2.

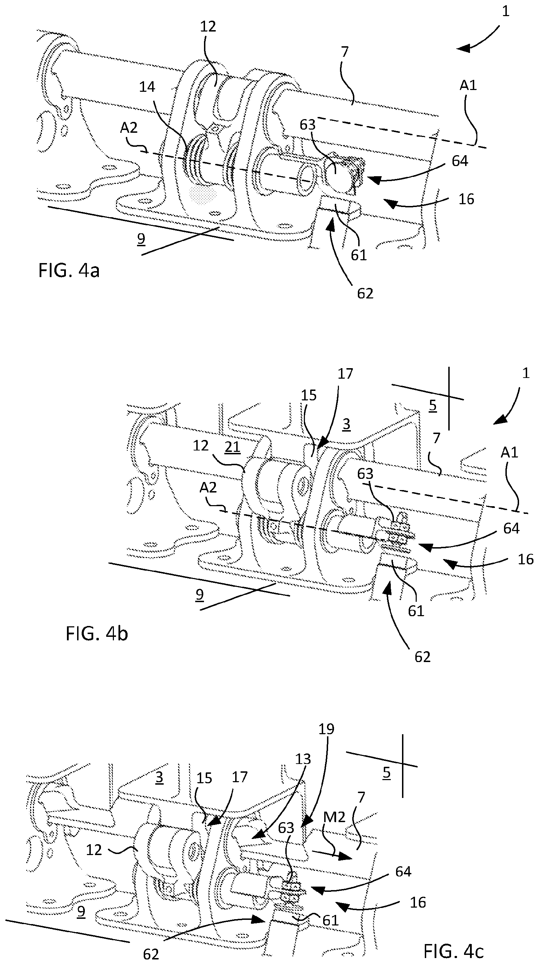

Figs. 4a-4c illustrate an interlock arrangement 1 according to a fourth example of the invention. In Figs. 4a and 4b a first body (reference sign 5 in Fig. 4b) is open (the first body is not shown in Fig. 4a). A laterally moveable latch bar member 7 of a second body 9 of the interlock arrangement 1 (partly shown) is blocked to make a sliding motion along a first axis A1 by means a blocking member 12 hingedly coupled to the second body 9.

The blocking member 12 may be spring biased by means of a tension spring 14 for providing that the blocking member 12 will rotate back to the recess 19 when the pressing portion 15 of the latch fitting member 3 has leaved the recess 19 in the open position.

The blocking member 12 is arranged to be pushed away from a stop surface 13 of a recess 19 (shown in Fig. 4c) of the laterally moveable latch bar member 7 by means of a pressing portion 15 of a latch fitting member 3 of the first body 5, when the first body 5 moves into the closed position.

The blocking member 12 is hingedly coupled about a second axis A2, which is arranged in parallel to the first axis A1. The latch fitting member 3 is configured to move with the first body 5 making a first motion from an open position to the closed or near closed position, wherein the blocking member 12 is pushed away and the interlock arrangement 1 is ready to latch by moving the laterally moveable latch bar member 7 along the first axis as is shown in Fig. 4c.

In Fig. 4b is shown that the blocking member 12 has been pushed away and has rotated about the second axis A2.

The pressing portion 15 also forms a latch fitting engagement portion 17 of the latch fitting member 3 configured to pass a recess 19 (shown in Fig. 2c) of the laterally moveable latch bar member 7 during the closing sequence pushing away the blocking member 12. The latch fitting engagement portion 17 is configured to engage an engagement section 21 of the laterally moveable latch bar member 7 arranged adjacent the recess 19. The engagement section 21 is engaged by the latch fitting engagement portion 17 during the second motion M2 (see Fig. 4c) toward the latched position.

A sensor unit 16 comprising a sensor target 61 of a sensor unit first part 62 and comprising a sensor target detecting unit 63 of a sensor unit second part 64 may be associated with the blocking member 12 for indicating a "first body near closed and ready to latch" state or "first body closed and ready to latch" state.

The sensor unit 16 is coupled to a control unit (not shown) which in turn is coupled to a drive arrangement (not shown) configured to move the laterally moveable latch bar member 7.

The sensor target detecting unit 63 may be rigidly coupled to the rotatable blocking member 12 and the sensor target 61 may be rigidly coupled to the second body 9.

The sensor unit 16 is configured to detect that the blocking member 12 has been pushed away from the stop surface 13, wherein the sensor target detecting unit 63 has been rotated (together with the blocking member 12) into a position facing the sensor target 61.

A signal generated by the sensor unit 16 indicating that the blocking member 12 has been pushed away is fed to the control unit, which commands the drive arrangement to move the laterally moveable latch bar member 7 into the latching position as showed in Fig. 4c.

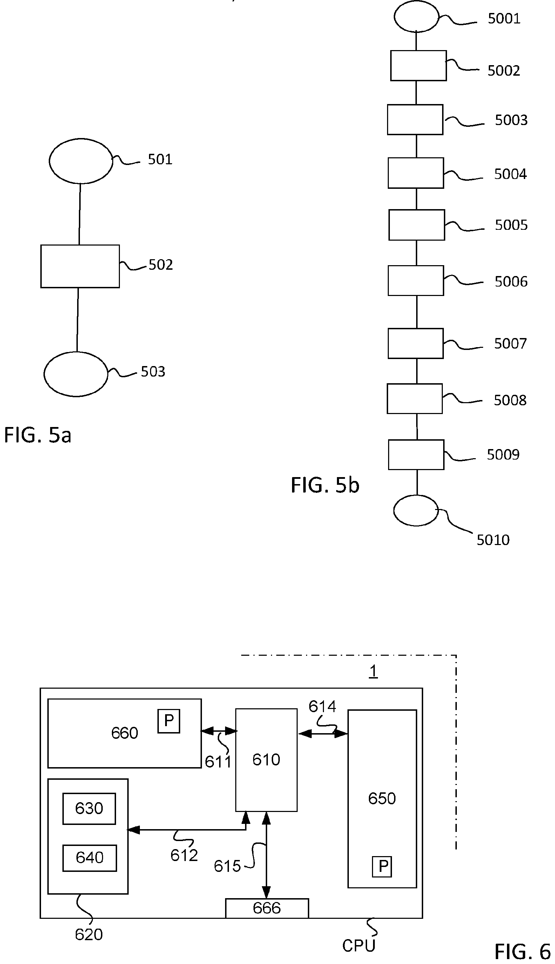

Figs. 5a-5b illustrate a respective flow chart according to further aspects of the invention. Fig. 5a illustrates an example of a method for secure latching a first body to a second body by means of an interlock arrangement comprising a latch fitting member of a first body and a laterally moveable latch bar member of a second body, which interlock arrangement is configured for latching the first body to the second body into a closed position or near closed position whereas the laterally moveable latch bar member is configured to subsequently latch the latch fitting member in a latching position

The latch fitting member is configured to move with the first body making a first motion from an open position to the closed position. A blocking member portion of a blocking member is configured to block a stop surface of the laterally moveable latch bar member for blocking the laterally moveable latch bar member to make a second motion from an unlatching position into the latching position. The blocking member portion is configured to be pushed away from the stop surface by means of a pressing portion moved together with the first body during the first motion.

The method comprises a first starting step 501. A second step 502 comprises the method for secure latching a first body to a second body by means of an interlock arrangement comprising a latch fitting member of a first body and a laterally moveable latch bar member of a second body. A third step 503 comprises the stop of the method.

The second step 502 may comprise the step of closing the first body into the closed position; pushing away the blocking member portion from the stop surface by means of the first motion; providing the second motion of the laterally moveable latch bar member from the unlatching position into the latching position after that (subsequently) the blocking member portion has been pushed away from the stop surface; and latching the first body to the second body in a closed position by positioning the laterally moveable latch bar member in the latching position.

Fig. 5b illustrates a further example of a method for secure latching a first body to a second body by means of an interlock arrangement comprising a latch fitting member of a first body and a laterally moveable latch bar member of a second body. A first step 5001 comprises starting the method. A second step 5002 comprises closing the first body into the closed position. A third step 5003 comprises pushing away the blocking member portion from the stop surface by means of the first motion. A fourth step 5004 comprises providing the second motion of the laterally moveable latch bar member from the unlatching position into the latching position after that (subsequently) the blocking member portion has been pushed away from the stop surface. A fifth step 5005 comprises latching the first body to the second body in a closed position by positioning the laterally moveable latch bar member in the latching position.

A sixth step 5006 may comprise detecting the position and/or motion of the blocking member portion relative the laterally moveable latch bar member.

A seventh step 5007 may comprise passing a latch fitting engagement portion of the latch fitting member through a recess formed in the laterally moveable latch bar member and pushing away the blocking member portion.

An eighth step 5008 may comprise bringing into engagement the latch fitting member with an engagement area of the laterally moveable latch bar member adjacent the recess by making the second motion.

A ninth step 5009 may be a step indicating that the blocking member portion has been pushed away from the stop surface. A tenth 5010 step comprises the stop of the method.

Fig. 6 illustrates a control unit CPU of an interlock arrangement 1 according to an example of the invention. The control unit CPU may be configured to control secure latching a first body to a second body by means of an interlock arrangement comprising a latch fitting member of a first body and a laterally moveable latch bar member of a second body, which interlock arrangement is configured for latching the first body to the second body into a closed position or near closed position, whereas the laterally moveable latch bar member is configured to subsequently latch the latch fitting member in a latching position; the latch fitting member is configured to move with the first body making a first motion from an open position to the closed position; a blocking member portion of a blocking member is configured to block a stop surface of the laterally moveable latch bar member for blocking the laterally moveable latch bar member to make a second motion from an unlatching position into the latching position, which blocking member portion is configured to be pushed away from the stop surface by means of a pressing portion moved together with the first body during the first motion.

A computer (not shown) of the interlock arrangement 1 may comprise the control unit CPU, which further comprises a non-volatile memory NVM 620, which is a computer memory that can retain stored information even when the computer is not powered. The control unit CPU further comprises a processing unit 610 and a read/write memory 650. The NVM 620 comprises a first memory unit 630.

A computer program (which can be of any type suitable for any operational data) is stored in the first memory unit 630 for controlling the functionality of the control unit CPU.

Furthermore, the control unit CPU comprises a bus controller (not shown), a serial communication left (not shown) providing a physical interface, through which information transfers separately in two directions.

The control unit CPU may comprise any suitable type of I/O module (not shown) providing input/output signal transfer, an A/D converter (not shown) for converting continuously varying signals from the sensor unit (not shown) into binary code suitable for the computer. The control unit CPU may also comprise an input/output unit (not shown) for adaptation to time and date. The control unit CPU may comprise an event counter (not shown) for counting the number of event multiples that occur from independent events during the operation of the interlock arrangement 1. The NVM 620 also includes a second memory unit 640 for external controlled operation.

A data medium storing program P may comprise routines for automatically operating the interlock arrangement. The data medium storing program P comprises a program code stored on a medium, which is readable on the computer, for causing the control unit CPU to perform the method. The data medium storing program P further may be stored in a separate memory 660 and/or in the read/write memory 650.

The data medium storing program P may be stored in executable or compressed data format. It is to be understood that when the processing unit 610 is described to execute a specific function, this involves that the processing unit 610 may execute a certain part of the program stored in the separate memory 660 or a certain part of the program stored in the read/write memory 650. The processing unit 610 is associated with a data port 666 for communication via a first data bus 615. The non-volatile memory NVM 620 is adapted for communication with the processing unit 610 via a second data bus 612.

The separate memory 660 is adapted for communication with the processing unit 610 via a third data bus 611. The read/write memory 650 is adapted to communicate with the processing unit 610 via a fourth data bus 614. When data is received by the data port 666, the data will be stored temporary in the second memory unit 640. After that the received data is temporary stored, the processing unit 610 will be ready to execute the program code, according to the method.

Preferably, the signals (received by the data port 666) may comprise information about the position of the first body relative the second body and/or information about the position of the blocking member and/or information about the position of the laterally moveable latch bar member.

According to one aspect, signals received by the data port 666 may contain only information about the actual position of the blocking member and thus indicating the actual position of the closing of the first body to the second body in fully closed position or near closed position.

The received signals at the data port 666 may be used by the control unit CPU for controlling and monitoring of an automatic latching sequence and/or a semi-automatic latching sequence and/or manual latching sequence of the first body to the second body.

The signals can be used for different operations of the interlock arrangement, e.g. used for a precheck procedure before flight.

The method can also partially be executed by the control unit CPU by means of the processing unit 610, which processing unit 610 runs the data medium storing program P being stored in the separate memory 660 or the read/write memory 650.

When the control unit CPU runs the data medium storing program P the method steps disclosed in this disclosure may be executed.

The present invention is of course not in any way restricted to the preferred embodiments described above, but many possibilities to modifications, or combinations of the described examples, thereof should be apparent to a person with ordinary skill in the art without departing from the invention as defined by the appended claims.

## Claims

1. A method for secure latching a first body (5) to a second body (9) of an aerial vehicle (2) by means of an interlock arrangement (1) comprising a latch fitting member (3) of a first body (5) and a laterally moveable latch bar member (7) of a second body (9), which interlock arrangement (1) is configured for latching the first body (5) to the second body (9) into a closed position (Cp) whereas the laterally moveable latch bar member (7) is configured to subsequently latch the latch fitting member (3) in a latching position (Lp); the latch fitting member (3) is configured to move with the first body (5) making a first motion (M1) from an open position (Op) to the closed position (Cp); a blocking member portion (11) of a blocking member (12) is configured to block a stop surface (13) of the laterally moveable laterally moveable latch bar member (7) for blocking the laterally moveable latch bar member (7) from making a second motion (M2) from an unlatching position (Up) into the latching position (Lp), which blocking member portion (11) is configured to be pushed away from the stop surface (13) by means of a pressing portion (15) moved together with the first body (5) during the first motion (M1), the method is **characterized by** the steps of:
- closing the first body (5) into the closed position (Cp);
- pushing away the blocking member portion (11) from the stop surface (13) by means of the first motion (M1);
- providing the second motion (M2) of the laterally moveable latch bar member (7) from the unlatching position (Up) into the latching position (Lp) subsequently the blocking member portion (11) has been pushed away from the stop surface (13); and
- latching the first body (5) to the second body (9) in a closed position (Cp) by positioning the laterally moveable latch bar member (7) in the latching position (Lp).

2. The method according to claim 1, **characterized by** the further steps of:
- detecting the position and/or motion of the blocking member portion (11) relative the laterally moveable latch bar member (7).

3. The method according to claim 1 or 2, **characterized by** the steps of:
- passing a latch fitting engagement portion (17) of the latch fitting member (3) through a recess (19) formed in the laterally moveable latch bar member (7) and pushing away the blocking member portion (11); and
- bringing into engagement the latch fitting member (3) with an engagement area (21) of the laterally moveable latch bar member (7) adjacent the recess (19) by making the second motion (M2).

4. The method according to any of claims 1 to 3, **characterized by** the steps of:
- indicating that the blocking member portion (11) has been pushed away from the stop surface (13).

5. An interlock arrangement (1) of an aerial vehicle (2) configured for secure latching a first body (5) to a second body (9) in a closed position (CP); the interlock arrangement (1) comprises;
- a latch fitting member (3) of the first body (5) and a laterally moveable latch bar member (7) of the second body (9);
- the latch fitting member (3) is configured to move with the first body (5) making a first motion (M1) from an open position (Op) to the closed position (Cp);
- the laterally moveable latch bar member (7) is configured to subsequently latch the latch fitting member (3) into a latching position (Lp); **characterized by**
- the interlock arrangement (1) further comprises a blocking member portion (11) of a blocking member (12);
- the blocking member portion (11) is configured to block a stop surface (13) of the laterally moveable latch bar member (7) for blocking the laterally moveable latch bar member (7) to make a second motion (M2) from an unlatching position (Up) to the latching position (Lp) achieving that the blocking member (12) physically blocks the second motion (M2) from initiating if the blocking member (12) has not interacted with the closing first body (5); and
- the blocking member portion (11) is configured to be pushed away from the stop surface (13) by means of a pressing portion (15) moved together with the first body (5) during the first motion (M1).

6. The interlock arrangement (1) according to claim 5, **wherein** a sensor unit (16) is associated with the blocking member portion (11) for detecting that the blocking member portion (11) has been pushed away from the abutment surface (13).

7. The interlock arrangement (1) according to claim 6, **wherein** the sensor unit (16) comprises a position sensor and/or a motion sensor.

8. The interlock arrangement (1) according to any of claims 5 to 7, **wherein** the pressing portion (15) forms a latch fitting engagement portion (17) of the latch fitting member (3) configured to pass a recess (19) of the laterally moveable latch bar member (7) when the first body (5) making the first motion (M1), wherein the stop surface (13) is formed in the recess (19).

9. The interlock arrangement (1) according to claim 8, **wherein** the latch fitting engagement portion (17) is configured to engage an engagement area (21) of the laterally moveable latch bar member (7) arranged adjacent the recess (19) in the latched position (Lp).

10. The interlock arrangement (1) according to any of claims 5 to 9, **wherein** the first body (5) is configured to be closed into the closed position (Cp), whereas the blocking member portion (11) is pushed away from the stop surface (13) by the pressing portion (15) for permitting the laterally moveable latch bar member (7) to make the second motion (M2) into the latching position (Lp), the interlock arrangement (1) comprises a control unit (CPU) coupled to a sensor unit (16) configured to detect the state of the blocking member portion (11), wherein the control unit (CPU) is configured to control the second motion (M2) of the laterally moveable latch bar member (7).

11. The interlock arrangement (1) according to any of claims 5 to 10, **wherein** the laterally moveable latch bar member (7) is slidingly arranged in the second body (9) and is displaceable in parallel with a closable wall edge of the first body (5) comprising at least two latch fitting members (3).

12. A control unit (CPU) configured to control secure latching a first body (5) to a second body (9) by means of an interlock arrangement (1) according to any of claims 5-11, the control unit (CPU) is configured to be coupled to a drive arrangement (22) configured for driving the first body (5) into a closed position (Cp) with the second body (9) and driving the laterally moveable latch bar member (7) to latch the latch fitting member (3) into the latching position (Lp); the control unit (CPU) is configured to control the latching according to any of the method claims 1 to 4.

13. A data medium storing a program (P) adapted for controlling secure latching a first body (5) to a second body (9) by means of the control unit (CPU) according to claim 12, wherein the control unit (CPU) is coupled to a drive arrangement (22) configured for driving the first body (5) into a closed position (Cp), wherein the data medium comprises a program code stored on a medium, which is readable on a computer, for the control unit (CPU) to cause the drive arrangement (22) to perform the method steps of:
- closing the first body (5) into the closed position (Cp);
- pushing away the blocking member portion (11) from the stop surface (13) by means of the first motion (M1);
- providing the second motion (M2) of the laterally moveable latch bar member (7) from the unlatching position (Up) to the latching position (Lp) subsequently the blocking member portion (11) has been pushed away from the stop surface (13); and
- latching the first body (5) to the second body (9) in a closed position (Cp) by positioning the laterally moveable latch bar member (7) in the latching position (Lp).

## Patentansprüche

1. Verfahren zum sicheren Verriegeln eines ersten Körpers (5) mit einem zweiten Körper (9) eines Luftfahrzeugs (2) mittels einer Sperranordnung (1), die ein Verriegelungsbeschlagelement (3) eines ersten Körpers (5) und ein seitlich bewegbares Riegelelement (7) eines zweiten Körpers (9) umfasst, wobei die Sperranordnung (1) zum Verriegeln des ersten Körpers (5) mit dem zweiten Körper (9) in eine geschlossene Position (Cp) konfiguriert ist, während das seitlich bewegbare Riegelelement (7) dazu konfiguriert ist, anschließend das Verriegelungsbeschlagelement (3) in einer Verriegelungsposition (Lp) zu verriegeln; das Verriegelungsbeschlagelement (3) dazu konfiguriert ist, sich mit dem ersten Körper (5) zu bewegen, der eine erste Bewegung (M1) aus einer offenen Position (Op) in die geschlossene Position (Cp) vornimmt; ein Blockierelementabschnitt (11) eines Blockierelements (12) dazu konfiguriert ist, zu blockieren, dass eine Anschlagfläche (13) des seitlich bewegbaren Riegelelements (7) zum Blockieren des seitlich bewegbaren Riegelelements (7) eine zweite Bewegung (M2) aus einer Entriegelungsposition (Up) in die Verriegelungsposition (Lp) vornimmt, wobei der Blockierelementabschnitt (11) dazu konfiguriert ist, mittels eines Pressabschnitts (15), der während der ersten Bewegung (M1) gemeinsam mit dem ersten Körper (5) bewegt wird, von der Anschlagfläche (13) weggeschoben zu werden, das Verfahren durch die folgenden Schritte gekennzeichnet ist:
- Schließen des ersten Körpers (5) in die geschlossene Position (Cp);
- Wegschieben des Blockierelementabschnitts (11) von der Anschlagfläche (13) mittels der ersten Bewegung (M1);
- Bereitstellen der zweiten Bewegung (M2) des seitlich bewegbaren Riegelelements (7) aus der Entriegelungsposition (Up) in die Verriegelungsposition (Lp) im Anschluss daran, dass der Blockierelementabschnitt (11) von der Anschlagfläche (13) weggeschoben worden ist; und
- Verriegeln des ersten Körpers (5) mit dem zweiten Körper (9) in einer geschlossenen Position (Cp) durch Positionieren des seitlich bewegbaren Riegelelements (7) in der Verriegelungsposition (Lp).

2. Verfahren nach Anspruch 1, **gekennzeichnet durch** die folgenden weiteren Schritte:
- Detektieren der Position und/oder Bewegung des Blockierelementabschnitts (11) relativ zu dem seitlich bewegbaren Riegelelement (7).

3. Verfahren nach Anspruch 1 oder 2, **gekennzeichnet durch** die folgenden Schritte:
- Führen eines Verriegelungsbeschlageingriffsabschnitts (17) des Verriegelungsbeschlagelements (3) durch eine Aussparung (19), die in dem seitlich bewegbaren Riegelelement (7) ausgebildet ist, und Wegschieben des Blockierelements (11); und
- ineingriffbringen des Verriegelungsbeschlagelements (3) mit einem Eingriffsbereich (21) des seitlich bewegbaren Riegelelements (7) benachbart zu der Aussparung (19) durch Vornehmen der zweiten Bewegung (M2).

4. Verfahren nach einem der Ansprüche 1 bis 3, **gekennzeichnet durch** die folgenden Schritte:
- Angeben, dass der Blockierelementabschnitt (11) von der Anschlagfläche (13) weggeschoben worden ist.

5. Sperranordnung (1) eines Luftfahrzeugs (2), die zum sicheren Verriegeln eines ersten Körpers (5) mit einem zweiten Körper (9) in einer geschlossenen Position (Cp) konfiguriert ist; die Sperranordnung (1) Folgendes umfasst:
- ein Verriegelungsbeschlagelement (3) des ersten Körpers (5) und ein seitlich bewegbares Riegelelement (7) des zweiten Körpers (9);
- das Verriegelungsbeschlagelement (3) ist dazu konfiguriert, sich mit dem ersten Körper (5) zu bewegen, der eine erste Bewegung (M1) aus einer offenen Position (Op) in die geschlossene Position (Cp) vornimmt;
- das seitlich bewegbare Riegelelement (7) ist dazu konfiguriert, anschließend das Verriegelungsbeschlagelement (3) in eine Verriegelungsposition (Lp) zu verriegeln; **dadurch gekennzeichnet, dass**
- die Sperranordnung (1) ferner einen Blockierelementabschnitt (11) eines Blockierelements (12) umfasst;
- der Blockierelementabschnitt (11) dazu konfiguriert ist, zu blockieren, dass eine Anschlagfläche (13) des seitlich bewegbaren Riegelelements (7) zum Blockieren des seitlich bewegbaren Riegelelements (7) eine zweite Bewegung (M2) aus einer Entriegelungsposition (Up) in die Verriegelungsposition (Lp) vornimmt, was erreicht, dass das Blockierelement (12) physisch blockiert, dass die zweite Bewegung (M2) eingeleitet wird, falls das Blockierelement (12) nicht mit dem sich schließenden ersten Körper (5) interagiert hat; und
- der Blockierelementabschnitt (11) dazu konfiguriert ist, mittels eines Pressabschnitts (15), der während der ersten Bewegung (M1) gemeinsam mit dem ersten Körper (5) bewegt wird, von der Anschlagfläche (13) weggeschoben zu werden.

6. Sperranordnung (1) nach Anspruch 5, wobei eine Sensoreinheit (16) dem Blockierelementabschnitt (11) zugeordnet ist, um zu detektieren, dass der Blockierelementabschnitt (11) von der Stoßfläche (13) weggeschoben worden ist.

7. Sperranordnung (1) nach Anspruch 6, wobei die Sensoreinheit (16) einen Positionssensor und/oder einen Bewegungssensor umfasst.

8. Sperranordnung (1) nach einem der Ansprüche 5 bis 7, wobei der Pressabschnitt (15) einen Verriegelungsbeschlageingriffsabschnitt (17) des Verriegelungsbeschlagelements (3) ausbildet, der dazu konfiguriert ist, durch eine Aussparung (19) des seitlich bewegbaren Riegelelements (7) zu verlaufen, wenn der erste Körper (5) die erste Bewegung (M1) vornimmt, wobei die Anschlagfläche (13) in der Aussparung (19) ausgebildet ist.

9. Sperranordnung (1) nach Anspruch 8, wobei der Verriegelungsbeschlageingriffsabschnitt (17) dazu konfiguriert ist, einen Eingriffsbereich (21) des seitlich bewegbaren Riegelelements (7) in Eingriff zu nehmen, der in der verriegelten Position (Lp) benachbart zu der Aussparung (19) angeordnet ist.

10. Sperranordnung (1) nach einem der Ansprüche 5 bis 9, wobei der erste Körper (5) dazu konfiguriert ist, in die geschlossene Position (Cp) geschlossen zu werden, während der Blockierelementabschnitt (11) durch den Pressabschnitt (15) von der Anschlagfläche (13) weggedrückt wird, um dem seitlich bewegbaren Riegelelement (7) zu gestatten, die zweite Bewegung (M2) in die Verriegelungsposition (Lp) vorzunehmen, wobei die Sperranordnung (1) eine Steuereinheit (CPU) umfasst, die an eine Sensoreinheit (16) gekoppelt ist, die dazu konfiguriert ist, den Zustand des Blockierelementabschnitts (11) zu detektieren, wobei die Steuereinheit (CPU) dazu konfiguriert ist, die zweite Bewegung (M2) des seitlich bewegbaren Riegelelements (7) zu steuern.

11. Sperranordnung (1) nach einem der Ansprüche 5 bis 10, wobei das seitlich bewegbare Riegelelement (7) gleitend in dem zweiten Körper (9) angeordnet ist und parallel zu einer verschließbaren Wandkante des ersten Körpers (5) verschiebbar ist, die mindestens zwei Verriegelungsbeschlagelemente (3) umfasst.

12. Steuereinheit (CPU), die dazu konfiguriert ist, sicheres Verriegeln eines ersten Körpers (5) mit einem zweiten Körper (9) mittels einer Sperranordnung (1) nach einem der Ansprüche 5-11 zu steuern, die Steuereinheit (CPU) dazu konfiguriert ist, an eine Antriebsanordnung (22) gekoppelt zu sein, die dazu konfiguriert ist, den ersten Körper (5) in eine geschlossene Position (Cp) mit dem zweiten Körper (9) anzutreiben und das seitlich bewegbare Riegelelement (7) anzutreiben, um das Verriegelungsbeschlagelement (3) in die Verriegelungsposition (Lp) zu verriegeln; wobei die Steuereinheit (CPU) dazu konfiguriert ist, das Verriegeln nach einem der Verfahrensansprüche 1 bis 4 zu steuern.

13. Datenmedium, das ein Programm (P) speichert, das dazu ausgelegt ist, sicheres Verriegeln eines ersten Körpers (5) mit einem zweiten Körper (9) mittels der Steuereinheit (CPU) nach Anspruch 12 zu steuern, wobei die Steuereinheit (CPU) an eine Antriebsanordnung (22) gekoppelt ist, die dazu konfiguriert ist, den ersten Körper (5) in eine geschlossene Position (Cp) anzutreiben, wobei das Datenmedium einen Programmcode umfasst, der auf einem Medium gespeichert ist, das auf einem Computer lesbar ist, damit die Steuereinheit (CPU) die Antriebsanordnung (22) dazu veranlasst, die folgenden Verfahrensschritte durchzuführen:
- Schließen des ersten Körpers (5) in die geschlossene Position (Cp);
- Wegschieben des Blockierelementabschnitts (11) von der Anschlagfläche (13) mittels der ersten Bewegung (M1);
- Bereitstellen der zweiten Bewegung (M2) des seitlich bewegbaren Riegelelements (7) aus der Entriegelungsposition (Up) in die Verriegelungsposition (Lp) im Anschluss daran, dass der Blockierelementabschnitt (11) von der Anschlagfläche (13) weggeschoben worden ist; und
- Verriegeln des ersten Körpers (5) mit dem zweiten Körper (9) in einer geschlossenen Position (Cp) durch Positionieren des seitlich bewegbaren Riegelelements (7) in der Verriegelungsposition (Lp).

## Revendications

1. Procédé d'encliquetage sécurisé d'un premier corps (5) sur un second corps (9) d'un véhicule aérien (2) au moyen d'un agencement de verrouillage (1) comprenant un élément de ferrure d'encliquetage (3) d'un premier corps (5) et un élément de barre d'encliquetage mobile latéralement (7) d'un second corps (9), lequel agencement de verrouillage (1) est configuré pour verrouiller le premier corps (5) sur le second corps (9) dans une position fermée (Cp) tandis que l'élément de barre d'encliquetage mobile latéralement (7) est configuré pour verrouiller ensuite l'élément de ferrure d'encliquetage (3) dans une position d'encliquetage (Lp) ; l'élément de ferrure d'encliquetage (3) est configuré pour se déplacer avec le premier corps (5) réalisant un premier mouvement (M1) d'une position ouverte (Op) à la position fermée (Cp) ; une partie d'élément de blocage (11) d'un élément de blocage (12) est configurée pour bloquer une surface d'arrêt (13) de l'élément de barre d'encliquetage mobile latéralement (7) pour empêcher l'élément de barre d'encliquetage mobile latéralement (7) de réaliser un second mouvement (M2) d'une position de désencliquetage (Up) dans la position d'encliquetage (Lp), laquelle partie d'élément de blocage (11) est configurée pour être repoussée de la surface d'arrêt (13) au moyen d'une partie de pression (15) déplacée conjointement avec le premier corps (5) pendant le premier mouvement (M1), le procédé est **caractérisé par** les étapes de :
- fermeture du premier corps (5) dans la position fermée (Cp) ;
- repoussement de la partie d'élément de blocage (11) de la surface d'arrêt (13) au moyen du premier mouvement (M1) ;
- fourniture du second mouvement (M2) de l'élément de barre d'encliquetage mobile latéralement (7) de la position de désencliquetage (Up) dans la position d'encliquetage (Lp), après que la partie d'élément de blocage (11) a été repoussée de la surface d'arrêt (13) ; et
- encliquetage du premier corps (5) sur le second corps (9) dans une position fermée (Cp) par positionnement de l'élément de barre d'encliquetage mobile latéralement (7) dans la position d'encliquetage (Lp).

2. Procédé selon la revendication 1, **caractérisé par** les étapes supplémentaires de :
- détection de la position et/ou du mouvement de la partie d'élément de blocage (11) par rapport à l'élément de barre d'encliquetage mobile latéralement (7).

3. Procédé selon la revendication 1 ou 2, **caractérisé par** les étapes de :
- passage d'une partie d'engagement de ferrure d'encliquetage (17) de l'élément de ferrure d'encliquetage (3) à travers un évidement (19) formé dans l'élément de barre d'encliquetage mobile latéralement (7) et le repoussement de la partie d'élément de blocage (11) ; et
- mise en engagement de l'élément de ferrure d'encliquetage (3) avec une zone d'engagement (21) de l'élément de barre d'encliquetage mobile latéralement (7) de manière adjacente à l'évidement (19) par réalisation du second mouvement (M2).

4. Procédé selon l'une quelconque des revendications 1 à 3, **caractérisé par** les étapes :
- d'indication que la partie d'élément de blocage (11) a été repoussée de la surface d'arrêt (13).

5. Agencement de verrouillage (1) d'un véhicule aérien (2) configuré pour l'encliquetage sécurisé d'un premier corps (5) sur un second corps (9) dans une position fermée (CP) ; l'agencement de verrouillage (1) comprend ;
- un élément de ferrure d'encliquetage (3) du premier corps (5) et un élément de barre d'encliquetage mobile latéralement (7) du second corps (9) ;
- l'élément de ferrure d'encliquetage (3) est configuré pour se déplacer avec le premier corps (5) réaliser un premier mouvement (M1) d'une position ouverte (Op) à la position fermée (Cp) ;
- l'élément de barre d'encliquetage mobile latéralement (7) est configuré pour encliqueter par la suite l'élément de ferrure d'encliquetage (3) dans une position d'encliquetage (Lp) ; **caractérisé par**
- l'agencement de verrouillage (1) comprend en outre une partie d'élément de blocage (11) d'un élément de blocage (12) ;
- la partie d'élément de blocage (11) est configurée pour bloquer une surface d'arrêt (13) de l'élément de barre d'encliquetage mobile latéralement (7) pour empêcher l'élément de barre d'encliquetage mobile latéralement (7) de réaliser un second mouvement (M2) à partir d'une position de désencliquetage (Up) vers la position d'encliquetage (Lp) ce qui permet d'obtenir que l'élément de blocage (12) bloque physiquement l'initiation du second mouvement (M2) si l'élément de blocage (12) n'a pas interagi avec le premier corps de fermeture (5) ; et
- la partie d'élément de blocage (11) est configurée pour être repoussée de la surface d'arrêt (13) au moyen d'une partie de pression (15) déplacée conjointement avec le premier corps (5) pendant le premier mouvement (M1).

6. Agencement de verrouillage (1) selon la revendication 5, dans lequel une unité de capteur (16) est associée à la partie d'élément de blocage (11) pour détecter que la partie d'élément de blocage (11) a été repoussée de la surface de butée (13).

7. Agencement de verrouillage (1) selon la revendication 6, dans lequel l'unité de capteur (16) comprend un capteur de position et/ou un capteur de mouvement.

8. Agencement de verrouillage (1) selon l'une quelconque des revendications 5 à 7, dans lequel la partie de pression (15) forme une partie d'engagement de ferrure d'encliquetage (17) de l'élément de ferrure d'encliquetage (3) configurée pour passer par un évidement (19) de l'élément de barre d'encliquetage mobile latéralement (7) lorsque le premier corps (5) réalise le premier mouvement (M1), dans lequel la surface d'arrêt (13) est formée dans l'évidement (19).

9. Agencement de verrouillage (1) selon la revendication 8, dans lequel la partie d'engagement de ferrure d'encliquetage (17) est configurée pour s'engager avec une zone d'engagement (21) de l'élément de barre d'encliquetage mobile latéralement (7) agencé de manière adjacente à l'évidement (19) dans la position encliquetée (Lp).

10. Agencement de verrouillage (1) selon l'une quelconque des revendications 5 à 9, dans lequel le premier corps (5) est configuré pour être fermé dans la position fermée (Cp), tandis que la partie d'élément de blocage (11) est repoussée de la surface d'arrêt (13) par la partie de pression (15) pour permettre à l'élément de barre d'encliquetage mobile latéralement (7) de réaliser le second mouvement (M2) dans la position d'encliquetage (Lp), l'agencement de verrouillage (1) comprend une unité de commande (CPU) couplée à une unité de capteur (16) configurée pour détecter l'état de la partie d'élément de blocage (11), dans lequel l'unité de commande (CPU) est configurée pour commander le second mouvement (M2) de l'élément de barre d'encliquetage mobile latéralement (7).

11. Agencement de verrouillage (1) selon l'une quelconque des revendications 5 à 10, dans lequel l'élément de barre d'encliquetage mobile latéralement (7) est agencé de manière coulissante dans le second corps (9) et peut être déplacé parallèlement à un bord de paroi fermable du premier corps (5) comprenant au moins deux éléments de ferrure d'encliquetage (3).

12. Unité de commande (CPU) configurée pour commander l'encliquetage sécurisé d'un premier corps (5) sur un second corps (9) au moyen d'un agencement de verrouillage (1) selon l'une quelconque des revendications 5 à 11, l'unité de commande (CPU) est configurée pour être couplée à un agencement d'entraînement (22) configuré pour entraîner le premier corps (5) dans une position fermée (Cp) avec le second corps (9) et entraîner l'élément de barre d'encliquetage mobile latéralement (7) pour encliqueter l'élément de ferrure d'encliquetage (3) dans la position d'encliquetage (Lp) ; l'unité de commande (CPU) est configurée pour commander l'encliquetage selon l'une quelconque des revendications de procédé 1 à 4.

13. Programme de stockage de support de données (P) adapté pour commander l'encliquetage sécurisé d'un premier corps (5) sur un second corps (9) au moyen de l'unité de commande (CPU) selon la revendication 12, dans lequel l'unité de commande (CPU) est couplée à un agencement d'entraînement (22) configuré pour entraîner le premier corps (5) dans une position fermée (Cp), dans lequel le support de données comprend un code de programme stocké sur un support, qui est lisible sur un ordinateur, pour que l'unité de commande (CPU) amène l'agencement d'entraînement (22) à réaliser les étapes de :
- fermeture du premier corps (5) dans la position fermée (Cp) ;
- repoussement de la partie d'élément de blocage (11) de la surface d'arrêt (13) au moyen du premier mouvement (M1) ;
- fourniture du second mouvement (M2) de l'élément de barre d'encliquetage mobile latéralement (7) de la position de désencliquetage (Up) à la position d'encliquetage (Lp), après que la partie d'élément de blocage (11) a été repoussée de la surface d'arrêt (13) ; et
- encliquetage du premier corps (5) sur le second corps (9) dans une position fermée (Cp) par positionnement de l'élément de barre d'encliquetage mobile latéralement (7) dans la position d'encliquetage (Lp).
